# EUROPÄISCHE PATENTSCHRIFT

(11) **EP 1 892 213 B1**
(45) Veröffentlichungstag und Bekanntmachung des Hinweises auf die Patenterteilung: **06.05.2015**
(21) Anmeldenummer: 07015149.3
(22) Anmeldetag: 02.08.2007
(51) Int. Cl.: B66F 9/12, B62B 3/06

(54) **Lastarm für einen Niederhubwagen**
Lift arm for a hand pallet truck
Bras de charge pour un chariot élévateur à petite levée

(30) Priorität: 24.08.2006 DE 102006039758
(43) Veröffentlichungstag der Anmeldung: 27.02.2008
(60) Teilanmeldung: 15160531.8
(73) Patentinhaber: Jungheinrich Aktiengesellschaft, 22047 Hamburg (DE)
(72) Erfinder: Hüther, Sebastian, Dipl.-Ing., 24568 Kaltenkirchen (DE)
(74) Vertreter: Hauck Patentanwaltspartnerschaft mbB

(56) Entgegenhaltungen:
- EP-A- 0 562 484
- EP-A- 1 362 761
- DE-A1- 19 742 190

## Beschreibung

Die Erfindung bezieht sich auf einen Lastarm für einen Niederhubwagen nach dem Oberbegriff des Patentanspruchs 1.

Niederhubwagen haben bekanntlich zwei parallel beabstandete Lastarme, welche in geeigneter Weise an das Antriebsteil des Niederhubwagens angehängt und mit Hilfe eines Hubzylinders und eines Gestänges gegenüber dem Untergrund anhebbar sind. An den Enden der Lastarme sind Lasträder gelagert, und zwar in einer Schwinge, an die eine Zug- oder Druckstange innerhalb der Lastarme angreift, um die Lasträder relativ zu den Armen zu verschwenken, wenn der Hubzylinder die Lastarme anhebt. Ein derartiger Niederhubwagen ist etwa aus DE 197 42 190 bekannt geworden.

Aus dem genannten Stand der Technik ist auch bekannt, die Armspitze der Lastarme getrennt zu formen. Der Armkörper ist üblicherweise als U- oder C-förmiges Querschnittsprofil geformt und wird entweder einteilig aus Blech gekantet oder aus miteinander verschweißten Blechen zusammengesetzt. Die freien Enden der Grundkörper sind stumpf, und die Armspitzen weisen Stoßflächen auf, um gegen die stumpfen Flächen der Armgrundkörper angesetzt zu werden. Im bekannten Fall sind die Grundkörper aus Stahlblech gefertigt. Die Lastarmspitzen sind ebenfalls aus Stahlblech geformt. Außerdem ist ein aus Guß hergestelltes Befestigungsstück vorgesehen zur Lagerung einer Lastrolle, das mit der Lastarmspitze und mit dem Grundkörper verschweißt wird.

Aus der Druckschrift EP 0 562 484 A1 ist ein Lastarm für eine Gabel eines Niederhubwagens mit einer durch Gießen hergestellten Lastarmspitze bekannt geworden. Die Lastarmspitze ist mit einem aus Stahlblech gefertigten Armgrundkörper verschweißt.

Aus der Druckschrift EP 1 362 761 A2 ist ein Lastarm für eine Gabel eines Niederhubwagens mit den Merkmalen des Oberbegriffs des Anspruchs 1 bekannt geworden.

Der Erfindung liegt die Aufgabe zugrunde, einen Lastarm für einen Niederhubwagen zu schaffen, der mit minimalem Materialeinsatz herstellbar ist bei gleichzeitiger geringer Belastung der Schweißnaht. Außerdem soll die Armspitze an unterschiedliche Lastarmprofile anpaßbar sein.

Diese Aufgabe wird durch die Merkmale des Patentanspruchs 1 gelöst.

Bei dem erfindungsgemäßen Lastarm ist die Armspitze von einem einteiligen Gußteil gebildet. Die Armspitze weist an dem dem Armgrundkörper zugewandten Ende Armabschnitte auf, die sich bei Anlage von Armspitze und Armgrundkörper unter die zugeordneten Kanten oder Ränder des Armgrundkörpers erstrecken und mit den unteren Kanten oder Rändern des Armgrundkörpers verschweißt sind. Die Ausfahrflächen sind an der Unterseite der Armabschnitte vorgesehen.

Lastarme für den genannten Einsatz weisen üblicherweise Einfahr- und Ausfahrhilfen, zumeist in Form von unteren Flächen auf, die rampenartig verlaufen. Die Einfahrhilfen sind von zum freien Ende der Armspitzen hin ansteigenden Flächen und die Ausfahrhilfe von zum freien Ende der Armspitzen hin abfallenden Flächen gebildet, wobei die Einfahr- und Ausfahrflächen einen Abstand in Längsrichtung voneinander haben. Im bekannten Fall sind sowohl die Einfahr- als auch Ausfahrflächen an den separaten Armspitzen gebildet, wodurch diese relativ lang geraten. Außerdem liegt die Lagerung der Lastrollen relativ weit von den Schweißstellen entfernt, wodurch auf diese ein nicht unerhebliches Moment ausgeübt wird.

Bei der Erfindung hingegen sind die Ausfahrflächen an den Armabschnitten geformt, die sich gegen die Unterseite der Kanten oder Ränder der Lastarme anlegen. Die Ausfahrflächen liegen daher unter dem Grundkörper. Auf diese Weise kann die Länge der Armspitze erheblich reduziert werden. Die Lageröffnungen für die Lagerung der Lastrollen bzw. der Schwingen für die Lastrollen kann daher sehr nahe an die Stoßstelle zwischen Armspitze und Lastarmgrundkörper herangeführt werden. Die Belastung der Schweißstelle zwischen Grundkörper und Armspitze ist daher relativ gering.

Auch der Materialeinsatz ist bei dem erfindungsgemäßen Lastarm minimal, da die Armspitze als einteiliges einziges Bauteil vorzusehen ist, das zum Beispiel im Stahlguß gefertigt wird.

Nach einer Ausgestaltung der Erfindung ist vorgesehen, daß die Unterseite der Armabschnitte im Bereich der Stoßstelle von Armgrundkörper und Armspitze annähernd horizontal verläuft und zum freien Ende der Armabschnitte und zur unteren Kante oder zum unteren Rand des Armgrundkörpers hin rampenförmig ansteigt. Die Armabschnitte verringern zwar den Abstand der unteren Kanten der Lastarme vom Untergrund, die Lasträder halten jedoch die Lastarme im abgesenkten Zustand in ausreichend großem Abstand vom Untergrund, so daß dies keine Rolle spielt.

Bei geschweißter Ausführung des Armgrundkörpers haben die unteren Kanten des Armgrundkörpers eine Breite, die der Dicke der verwendeten Bleche entspricht. Daher ist bei der Erfindung vorgesehen, dass die Armabschnitte annähernd so breit sind wie die unteren Kanten oder Ränder des Armgrundkörpers.

Die Armspitze bildet am hinteren Ende eine Stoßfläche aus, die gegen das stumpfe vordere Ende des Armgrundkörpers zur Anlage kommt. Es ist vorteilhaft, wenn die miteinander zu verschweißenden Stoßflächen annähernd kongruent sind, um eine wirksame Schweißverbindung zu ermöglichen, die entsprechenden Lastmomente aufzunehmen in der Lage ist. Außerhalb des Stoßstellenbereiches kann die Wandung der Armspitze, die im Querschnitt ebenfalls U-förmig ist, dünner ausgeführt sein als zum Beispiel die Wanddicke des Armgrundkörpers.

Um eine wirksame Verschweißung der Armabschnitte mit dem unteren Rand bzw. Unterkante des Armgrundkörpers zu ermöglichen, sieht eine weitere Ausgestaltung der Erfindung vor, daß die Armabschnitte zwischen den Enden Erhebungen aufweisen, deren plane Oberseiten gegen die unteren Kanten bzw. Ränder des Armgrundkörpers anliegen.

Um eine bessere Kraftübertragung zwischen Armspitze und Armgrundkörper zu erzielen, sieht eine weitere Ausgestaltung der Erfindung vor, daß die Stoßfläche der Armspitze von einer Fase gebildet ist, die dadurch geformt ist, daß an das hintere Ende der Armspitzen in Verlängerung der Seitenwände des Armgrundkörpers winkelförmige Ansätze geformt sind, deren Ober- und Seitenflächen gegenüber der äußeren Oberfläche und den äußeren Seitenflächen der Armspitze nach innen versetzt sind und sich gegen die Innenflächen des Armgrundköpers anlegen, der über die Ansätze übergeschoben ist in Anlage an die Fasen. Eine Verschweißung der Armspitze am Grundkörper erfolgt im wesentlichen im Bereich der Fasen sowie im Stoßbereich zwischen einem Abschnitt des unteren Randes und dem Ansatz.

Ausfiihrungsbeispiele der Erfindung werden nachfolgend anhand von Zeichnungen näher erläutert.
- Fig. 1: zeigt perspektivisch eine erstes Beispiel eines Lastarms von oben gesehen.
- Fig. 2: zeigt perspektivisch den Lastarm nach Fig. 1 von der Unterseite gesehen.
- Fig. 3: zeigt perspektivisch von der Unterseite gesehen eine Ausführungsform eines Lastarms nach der Erfindung.
- Fig. 4: zeigt perspektivisch den Verbindungsbereich eines Armgrundkörpers mit einer Armspitze.
- Fig. 5: zeigt perspektivisch den Stoßbereich der Armspitze mit dem Armgrundkörper gemäß Fig. 4 auf einer Seite des Armgrundkörpers.
- Fig. 6: zeigt eine ähnliche Darstellung wie Fig. 5, jedoch aus der Blickrichtung von der Armspitze aus gesehen.

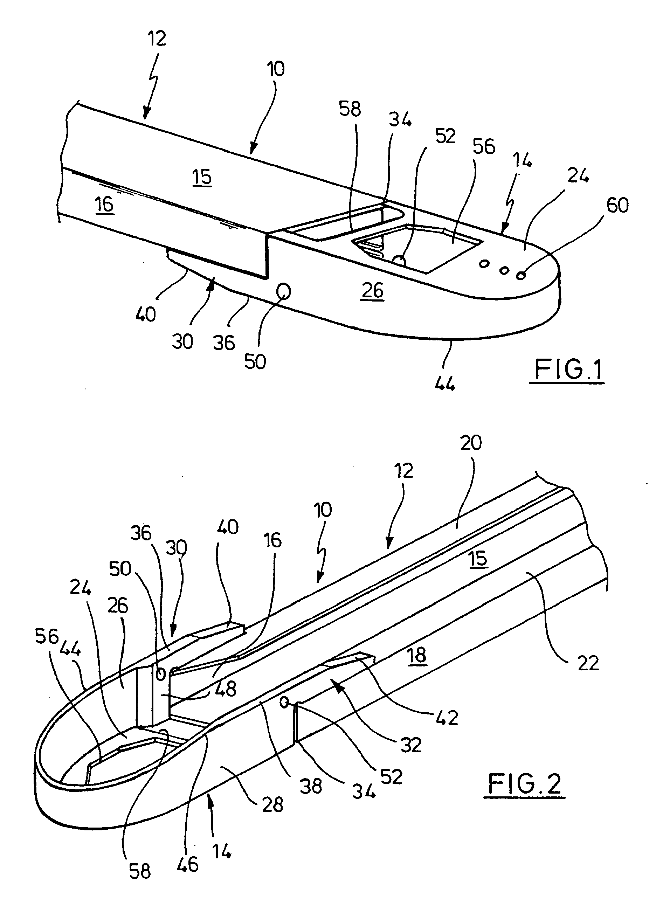

Figuren 1, 2 und 4 bis 6 zeigen keine Ausführungsbeispiele der Erfindung.

In den Figuren 1 und 2 ist das vordere Ende eines Lastarms 10 für einen Niederhubwagen gezeigt. Der Niederhubwagen selbst und die Anbringung des Lastarms 10 sind nicht gezeigt. Beides ist im Stand der Technik umfangreich bekannt.

Der Lastarm 10 weist einen Armgrundkörper 12 auf sowie eine Armspitze 14. Der Armgrundkörper 12 ist C-förmig, wie sich insbesondere aus Fig. 2 ergibt mit einem oberen Steg 15, zwei nach unten ragenden Schenkeln 16, 18 und an der Unterseite der Schenkel 16, 18 nach innen abgebogenen Rändern 20, 22. Das freie vordere Ende des Armkörpers 12 ist stumpf.

Die Armspitze 14 weist im Schnitt annähernd U-Profil auf mit einer oberen Wand 24 und Seitenwänden 26, 28, wobei die Seitenwände 26, 28 zum freien Ende hin gerundet ineinander laufen. Die Oberseite der oberen Wand 24, die im Bereich einer Stoßstelle 34 zwischen Armspitze 14 und Armkörper 12 in gleicher Höhe liegt wie die Oberseite des Stegs 15, fällt zum freien Ende der Armspitze 14 hin leicht ab.

Die Armspitze 14 ist an dem hinteren, dem Armgrundkörper 12 zugewandten Ende mit Armabschnitten 30, 32 versehen, die sich unter die Ränder 20, 22 erstrecken. Ihre Außenseite liegt in Flucht mit der Außenseite der Wandabschnitte 26, 28 im Bereich der Stoßstelle 34 zwischen Grundkörper 12 und Armspitze 14. Damit liegt die Außenseite der Armabschnitte 30, 32 auch in Flucht mit der Außenseite der Schenkel 16, 18 des Grundkörpers 12. Wie erkennbar, ist die Unterseite der Armabschnitte 30, 32 auf beiden Seiten der Stoßstelle annähernd horizontal bzw. parallel zur Unterseite der Ränder 20, 22, wie bei 36 bzw. 38 angegeben. Zum Grundkörper 12 hin fällt die Unterseite der Armabschnitte 30, 32 mit rampenförmigen Flächen 40, 42 ab. Auf der anderen Seite der Stoßstelle 34 steigt die Unterseite der Armspitze 14 rampenförmig an, wie bei 44 bzw. 46 zu sehen. Am freien Ende ist daher die Armspitze 14 mit geringerer Höhe versehen als im hinteren Bereich. Außerdem läuft die Armspitze zum freien Ende seitlich verjüngt zu, so daß, wie an sich bei Lastarmen üblich, eine Einfahrspitze gebildet ist für das einfache Einfahren zum Beispiel in Paletten. Die rampenförmigen Flächen 44, 46 bilden daher eine Einfahrhilfe. Umgekehrt bilden die Rampenflächen 40, 42 eine Ausfahrhilfe beim Herausfahren des Lastarms aus einer Palette.

Die Armabschnitte 30, 32 sind an verdickten inneren Seitenwandabschnitten der Armspitze 14 angeformt, denen einer bei 48 zu erkennen ist. Diese bilden zusammen mit der oberen Wand 24 der Armspitze 14 Stoßflächen, die annähernd kongruent sind zu den Endflächen des Grundkörpers 12 zwecks wirksamer Verschweißung dieser beiden Teile miteinander.

Die Armspitze 14 weist nahe der Stoßstelle 34 Lageröffnungen 50, 52 auf für die Lagerung einer Schwinge, die ihrerseits eine Lastrolle lagert. Eine derartige Konstruktion ist allgemein bekannt.

Die obere Wand 24 der Armspitze 14 weist eine erste Ausnehmung 56 auf, in die die nicht gezeigte Lastrolle hineinsteht. Eine weitere Ausnehmung 58 an der Oberseite 24 ist zur Stoßfläche des Grundkörpers 12 offen.

In der oberen Wand 24 auf der der Ausnehmung 48 gegenüberliegenden Seite der Ausnehmung 56 sind drei Öffnungen 60 geformt zum Beispiel zur Anbringung einer Einfahrrolle am Lastarm 10.

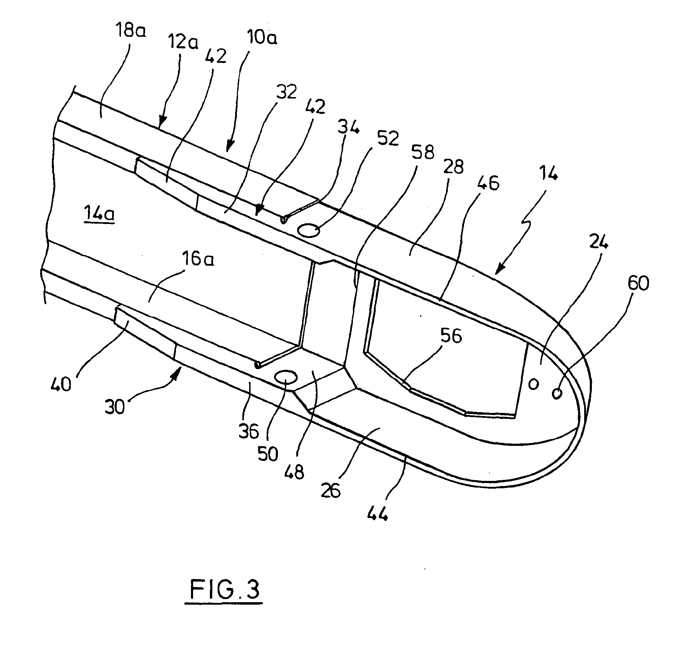

Bei der Ausführungsform nach Fig. 3 ist die Armspitze 14 identisch mit der nach den Figuren 1 und 2. Daher sind gleiche Bezugszeichen verwendet. Unterschiedlich ist hingegen ein Armgrundkörper 12a, der im Schnitt U-förmig ist mit einem Stegblech 14a und Schenkelblechen 16a, 18a, die miteinander verschweißt sind. Man erkennt, daß die Armspitze 14 mithin unabhängig von der gewählten Herstellung des Lastarmgrundkörpers einsetzbar ist.

Die Armspitze 14 wird im Bereich der Stoßflächen und im Anlagebereich der Armabschnitte 30, 32 mit dem Grundkörper 12 bzw. 12a verschweißt. Der Grundkörper 12 bzw. 12a besteht aus Stahlblech, und die Armspitze 14 ist im Stahlguß geformt.

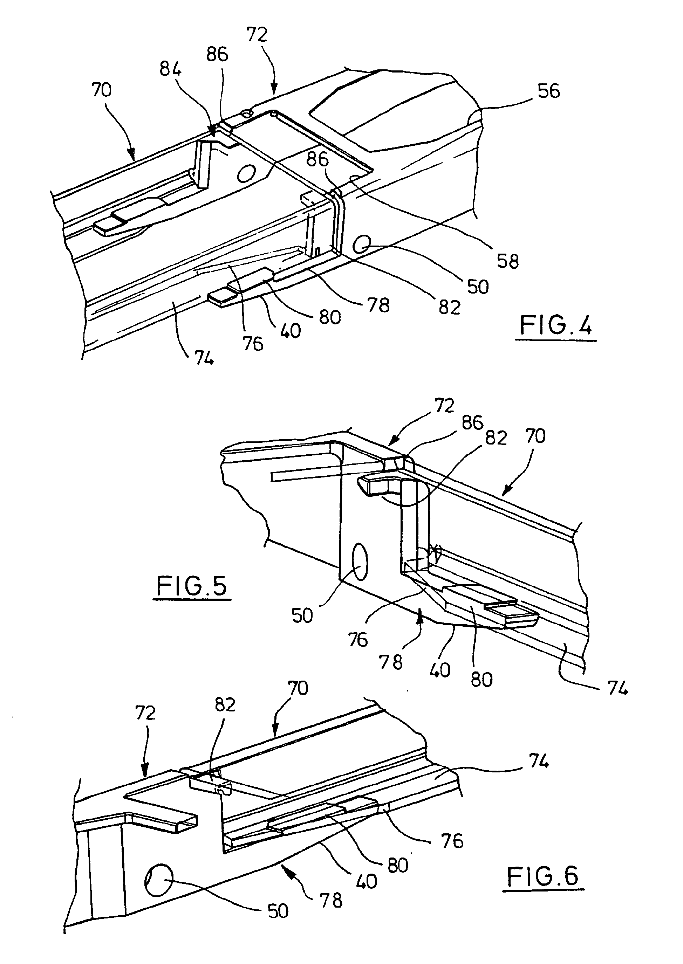

In den Figuren 4 bis 6 ist ein Armgrundkörper 70 angedeutet, der mit einer Armspitze 72 verbunden ist. Der Armgrundkörper 70 ist im Querschnitt C-förmig und weist daher an der Unterseite zwei durch Umkantung gebildete Ränder 74 auf. Wie bei 76 angedeutet, verjüngen sich die Ränder 74 zur Armspitze 72 hin, und zwar linear. Der Armgrundkörper 70 ist im übrigen stumpf ausgeführt.

Die Armspitze 72 weist, wie auch die Armspitze 14 nach den Figuren 1 bis 3; eine vordere Ausnehmung 56 und eine hintere Ausnehmung 58 auf, wobei die hintere Ausnehmung 58 zum Armgrundkörper 70 hin offen ist.

Wie ferner zu erkennen, weist die Armspitze 72 nach hinten ragende untere Armabschnitte 78 auf, die ähnlich wie die Armabschnitte 40, 42 sich unterhalb der Ränder 74 erstrecken. Die Unterseite der Armabschnitte 78 ist wie bei der voranstehenden beschriebenen Ausführungsform mit einer Anschrägung 40 versehen, die als Ausfahrhilfe dient. Die Armabschnitte 78 weisen eine Erhebung 80 auf mit planer Oberseite, die sich gegen den unteren Rand 74 des Armgrundkörpers 70 anlegt.

Oberhalb der Armabschnitte 78 und in Verlängerung der Seitenwände der Armspitze 72 sind jeweils winkelförmige Ansätze 82, 84 an die Armspitze 72 angeformt. Die Außenfläche und die Oberfläche der Ansätze 82, 84 liegt gegenüber den Außenseiten und der Oberseite der Armspitze 72 nach innen versetzt, wodurch eine Fase 86 gebildet ist. Die Außen- und Oberseiten der Ansätze 82, 84 sind derart bemessen, daß der Armgrundkörper 70 über die Ansätze 82, 84 geschoben werden kann, wie das insbesondere in Figur 4 zu erkennen ist, wobei sich Ober- und Außenseiten der Ansätze 82, 84 gegen die Innenflächen des Armgrundkörpers 70 anlegen. Das Ende des unteren Randes 74 stößt dabei gegen die zügekehrte Endfläche der Ansätze 82, 84, um dort verschweißt zu werden. Die Ränder 74 enden daher im Abstand zum sonst stumpfen Ende des Armgrundkörpers 70, wobei der Abstand die Länge des Ansatzes 82, 84 hat. Die Fase 86 hat mithin eine Breite, welche der Dicke des Bleches des Armgrundkörpers 70 entspricht. Dadurch gehen die Außen- und Oberseiten von Armspitze 72 und Armgrundkörper 70 ohne Stufe ineinander über.

## Patentansprüche

1. Lastarm für eine Gabel eines Niederhubwagens, mit einem Armgrundkörper (12a), der im Querschnitt annähernd U- -förmig ist mit nach oben weisendem Steg aus einem Stegblech (14a) und nach unten weisenden Schenkeln aus Schenkelblechen (16a, 18a), die eine Dicke aufweisen, und einer Armspitze (14), die zum freien Ende hin verjüngt ist und Lageröffnungen für die Lagerung einer Lastrolle und an der Unterseite Einfahr- und Ausfahrflächen aufweist, die gegenüber den unteren Kanten des Armgrundkörpers (12a) zum freien Ende der Armspitze (14) hin ansteigen bzw. abfallen, wobei die Armspitze (14) am hinteren Ende eine Stoßfläche, die gegen das stumpfe Ende des Armgrundkörpers (12a) anstößt, und an dem dem Armgrundkörper (12a) zugewandten Ende Armabschnitte (30, 32) aufweist, die sich bei Anlage von Armgrundkörper (12a) und Armspitze (14) unter den zugeordneten Kanten des Armgrundkörpers (12a) erstrecken und an den unteren Kanten des Armgrundkörpers (12a) anliegen, wobei die Ausfahrflächen an der Unterseite der Armabschnitte (30, 32) vorgesehen sind, **dadurch gekennzeichnet, daß** das Stegblech (14a) und die Schenkelbleche (16a, 18a) miteinander verschweißt sind und die Armspitze (14) von einem einteiligen Gußteil gebildet und über eine Schweißverbindung mit dem Armgrundkörper (12a) verbunden ist, die unteren Kanten des Armgrundkörpers (12a) eine Breite aufweisen, die der Dicke der Schenkelbleche (16a, 18a) entspricht, und die Armabschnitte (30, 32) jeweils annähernd so breit sind wie die unteren Kanten des Armgrundkörpers (12a).

2. Lastarm nach Anspruch 1, **dadurch gekennzeichnet, daß** die Unterseite der Armabschnitte (30, 32) im Bereich der Stoßstelle (34) von Armgrundkörper (12, 12a) und Armspitze (14) annähernd horizontal verläuft und zum freien Ende der Armabschnitte (30, 32) und zur unteren Kante bzw. unterem Rand des Armgrundkörpers (12, 12a) hin rampenförmig ansteigt.

3. Lastarm nach einem der Ansprüche 1 bis 2, **dadurch gekennzeichnet, daß** die obere Wand der Armspitze (14) eine erste Ausnehmung (56) für die Lastrolle und eine weitere Ausnehmung (58) aufweist, die zur Stoßstelle (34) hin offen ist.

4. Lastarm nach einem der Ansprüche 1 bis 3, **dadurch gekennzeichnet, daß** die Lageröffnungen (50, 52) in der Armspitze (14) der Stoßstelle (34) unmittelbar benachbart sind.

5. Lastarm nach einem der Ansprüche 1 bis 4, **dadurch gekennzeichnet, daß** die obere Wand (24) der Armspitze (14) mit Befestigungsöffnungen (60) für die Anbringung einer Einfahrrolle oder dergleichen geformt ist.

6. Lastarm nach einem der Ansprüche 1 bis 5, **dadurch gekennzeichnet, daß** die Armabschnitte (78) zwischen den Enden Erhebungen (80) aufweisen, deren plane Oberseiten gegen die unteren Kanten bzw. der Ränder (74) der Armgrundkörper (70) anliegen.

7. Lastarm nach einem der Ansprüche 1 bis 6, **dadurch gekennzeichnet, daß** die Stoßfläche der Armspitze (72) eine Fase (86) aufweist, die dadurch geformt ist, daß an das hintere Ende der Armspitze (72) in Verlängerung von deren Seitenwänden winkelförmige Ansätze (82, 84) angeformt sind, deren Ober- und Seitenflächen gegenüber der äußeren Oberfläche und den äußeren Seitenflächen der Armspitze (72) nach innen versetzt sind und sich gegen die Innenflächen des Armgrundkörpers (70) anlegen, der über die Ansätze (82, 84) übergeschoben ist in Anlage an die Fase (86).

## Claims

1. A load arm for a fork of a low lift industrial truck, with an arm frame (12a) which is approximately U-shaped in cross section with upward pointing bridge of a bridge plate (14a) and downward pointing legs of leg plates (16a, 18a), the leg plates (16a, 18a) having a thickness, and an arm tip (14) which is tapered towards the free end and comprises bearing openings for the bearing of a load roller and, on the lower side, introduction and withdrawal surfaces, which ascend or fall off, respectively, towards the free end of the arm tip (14) with respect to the lower edges of the arm frame (12a), wherein the arm tip (14) comprises, at the rear end, an abutting surface which abuts against the blunt end of the arm frame (12a), and, on the end facing the arm frame (12a), arm sections (30, 32) which extend below the associated edges of the arm frame (12a) and lie against the lower edges of the arm frame (12a) when arm frame (12a) and arm tip (14) cling together, wherein the withdrawal surfaces are provided on the lower side of the arm sections (30, 32), **characterised in that** the bridge plate (14a) and the leg plates (16a, 18a) are welded to each other, and the arm tip (14) is formed by an integral piece of cast material and is connected to the arm frame (12a) via a welding connection, the lower edges of the arm frame (12a) having a width corresponding to the thickness of the leg plates (16a, 18a), and the arm sections (30, 32) each being approximately as wide as the lower edges of the arm frame (12a).

2. A load arm according to claim 1, **characterised in that** the lower side of the arm sections (30, 32) runs approximately horizontally in the region of the abutting location (34) of arm frame (12, 12a) and arm tip (14), and ascends ramp-like towards the free end of the arm sections (30, 32) and towards the lower edge or lower brim, respectively, of the arm frame (12, 12a).

3. A load arm according to claim 1 or 2, **characterised in that** the upper wall of the arm tip (14) has a first recess (56) for the load roller and a further recess (58) which is open towards the abutting location (34).

4. A load arm according to any one of claims 1 to 3, **characterised in that** the bearing openings (50, 52) in the arm tip (14) are immediately neighboring to the abutting location (34).

5. A load arm according to any one of claims 1 to 4, **characterised in that** the upper wall (24) of the arm tip (14) is formed with attachment openings (60) for the installation of an introduction roller or the like.

6. A load arm according to any one of claims 1 to 5, **characterised in that** the arm sections (78) have elevations (80) between the ends, the planar upper sides of the elevations (80) lie against the lower edges or brims (74), respectively, of the arm frame (70).

7. A load arm according to any one of claims 1 to 6, **characterised in that** the abutting surface of the arm tip (72) has a chamfer (86), which is formed **in that** on the rear end of the arm tip (72) in extension of its side walls angular lugs (82, 84) are formed, the upper and side surfaces of which are offset towards the inside with respect to the outer upper surface and the outer side surfaces of the arm tip (72) and which sit snugly against the inner surfaces of the arm frame (70), which is thrusted over the lugs (82, 84) sitting snugly to the chamfer (86).

## Revendications

1. Bras de charge pour une fourche d'un chariot de manutention à petite levée, avec un corps de base de bras (12a), qui est approximativement en forme d'U dans sa section transversale, avec une traverse dirigée vers le haut en une tôle de traverse (14a) et des côtés dirigés vers le bas en tôles de côté (16a, 18a) qui ont une épaisseur, et avec un bout de bras (14) qui se rétrécie vers l'extrémité libre et comporte des ouvertures de palier pour le support d'un rouleau de charge et des surfaces de rétraction et d'extension sur son côté inférieur, qui montent ou respectivement baissent vers l'extrémité libre du bout de bras (14) par rapport aux arêtes inférieures du corps de base de bras (12a), le bout de bras (14) comportant une surface d'appui dans l'extrémité arrière qui heurte l'extrémité obtuse du corps de base de bras (12a), et des portions de bras (30, 32) dans l'extrémité dirigée vers le corps de base de bras (12a) qui s'étendent sous les arêtes associées du corps de base de bras (12a) quand corps de base de bras (12a) et bout de bras (14) portent bien l'un contre l'autre, et qui portent bien contre les arêtes inférieures du corps de base de bras (12a), les surfaces d'extension étant pourvues dans le côté inférieur des portions de bras (30, 32), **caractérisé en ce que** la tôle de traverse (14a) et les tôles de côté (16a. 18a) sont soudés les unes à les autres et le bout de bras (14) est formé d'une pièce moulée monobloc et connecté au corps de base de bras (12a) à travers un joint soudé, les arêtes inférieures du corps de base de bras (12a) ont une largeur qui correspond à l'épaisseur des tôles de côté (16a, 18a), et les portions de bras (30, 32) sont chacune approximativement aussi larges que les arêtes inférieures du corps de base de bras (12a).

2. Bras de charge selon la revendication 1, **caractérisé en ce que** le côté inférieur des portions de bras (30, 32) s'étend de manière approximativement horizontale dans la région du point de jonction (34) du corps de base de bras (12, 12a) et du bout de bras (14), et monte en forme de rampe en la direction de l'extrémité libre des portions de bras (30, 32) et de l'arête inférieure ou respectivement le bord inférieur du corps de base de bras (12, 12a).

3. Bras de charge selon l'une quelconque des revendications 1 à 2, **caractérisé en ce que** la paroi supérieure du bout de bras (14) comporte un premier évidement (56) pour le rouleau de charge, et un autre évidement (58) qui est ouvert en la direction du point de jonction (34).

4. Bras de charge selon l'une quelconque des revendications 1 à 3, **caractérisé en ce que** les ouvertures de palier (50, 52) dans le bout de bras (14) sont directement avoisinantes au point de jonction (34).

5. Bras de charge selon l'une quelconque des revendications 1 à 4, **caractérisé en ce que** la paroi supérieure (24) du bout de bras (14) est formée avec des ouvertures de fixation (60) pour attacher un rouleau de rétraction ou chose pareille.

6. Bras de charge selon l'une quelconque des revendications 1 à 5, **caractérisé en ce que** les portions de bras (78) ont des parties en relief (80) entre les extrémités, dont les côtés supérieurs planaires portent bien contre les arêtes inférieures ou respectivement les bords (74) du corps de base de bras (70).

7. Bras de charge selon l'une quelconque des revendications 1 à 6, **caractérisé en ce que** la surface d'appui du bout de bras (72) comporte un chanfrein (86) qui est formé **en ce que** des embouts angulaires (82, 84) sont formés sur l'extrémité arrière du bout de bras (72) dans le prolongement de ses parois latérales, dont les surfaces supérieure et latérale sont décalées vers l'intérieur par rapport à la surface extérieure et les surfaces latérales extérieures du bout de bras (72), et portent bien contre les surfaces intérieures du corps de base de bras (70) qui est poussé au-dessus des embouts (82, 84) en portant bien contre le chanfrein (86).
